# EUROPÄISCHE PATENTANMELDUNG

(11) **EP 1 840 278 A2**
(43) Veröffentlichungstag der Anmeldung: **03.10.2007**
(21) Anmeldenummer: 07004809.5
(22) Anmeldetag: 08.03.2007
(51) Int. Cl.: E02F 9/22, F16L 37/56

(54) **Schnellkupplung für eine Mehrzahl von Hydraulikleitungen**

(30) Priorität: 31.03.2006 DE 202006005203 U
(71) Anmelder: Liebherr-Hydraulikbagger GmbH, 88457 Kirchdorf/Iller (DE)
(72) Erfinder: Asam, Dirk, 89081 Ulm (DE); Wachter, Roland, 89294 Oberroth (DE); Walter, Christian, 87769 Oberrieden (DE)
(74) Vertreter: Laufhütte, Dieter

(57) **Zusammenfassung**

Die Erfindung betrifft eine Schnellkupplung mit einer Grundplatte (10) und einer Trägerplatte (20), wobei ein Zugrahmen (30) beweglich an der Grundplatte (10) geführt ist und Mittel zur Verbindung (35) mit der Trägerplatte (20) aufweist. Erfindungsgemäß wird die Trägerplatte (20) zum Schließen der Kupplung mittels des Zugrahmens (30) gegen die Grundplatte (10) bewegt.

## Beschreibung

Die vorliegende Erfindung betrifft eine Schnellkupplung zur Verbindung von Druckmittelzuführungen in einem Hydrauliksystem. Insbesondere kommen solche Schnellkupplungen bei der Verbindung von Druckmittelzuführungen an hydraulisch betriebenen Baumaschinen zum Einsatz, z. B. um ein Arbeitsgerät der Baumaschine schnell und einfach mit der Druckversorgung zu verbinden.

Für die Verbindung von Druckmittelzuführungen sind Schnellkupplungen bekannt, welche eine Grundplatte und eine Trägerplatte umfassen, auf welchen die jeweils zu verbindenden Druckmittelzuführungen angeordnet sind. An der Grundplatte einer solchen bekannten Schnellkupplung sind Spannhebel um koaxiale Drehlagerzapfen schwenkbar gelagert, während auf der Trägerplatte parallel zu den Drehlagerzapfen auf der Grundplatte Spannzapfen angeordnet sind. Zum Schließen der Kupplung weist der Spannhebel kurvenförmige Eingriffsschlitze auf, mit welchen er die über die Trägerplatte hervorstehenden Spannzapfen übergreift.

Zum Schließen der Schnellkupplung wird nun die Trägerplatte gegenüber der Grundplatte angeordnet und durch Drehen des Spannhebels gegen die Grundplatte gezogen.

Ein Nachteil dieser Konstruktion besteht darin, dass die kurvenförmigen Eingriffsschlitze beim Kuppelvorgang eine Kraftkomponente quer zur Kuppelrichtung erzeugen und zusätzliche seitliche Kräfte dadurch entstehen können, dass die Kupplungen nicht paarweise beiderseits der Schwenkachse der Spannhebel angeordnet sind. Des weiteren muss beim Kuppeln die bei großen Nennweiten sehr schwere Trägerplatte mit der einen Hand gehalten werden, während mit der zweiten Hand der Spannhebel betätigt wird. Ein weiterer Nachteil der bekannten Konstruktion besteht darin, dass bei großen Nennweiten die sehr großen Kräfte über die Spannzangen übertragen werden müssen, und diese aus diesem Grund relativ groß dimensioniert werden müssen. Dieser Umstand bedingt sehr breite Eingriffsschlitze, welche sich dann auf den tragenden Querschnitt und auf den Durchmesser der Spannhebel niederschlagen, was das Gewicht und die Größe der Konstruktion erhöht.

Aufgabe der vorliegenden Erfindung ist es deshalb, eine Schnellkupplung zur Verfügung zu stellen, welche einfach zu bedienen ist, eine kompakte und preisgünstige Konstruktion aufweist und dennoch eine sichere und verschleißarme Verbindung von Druckmittelzuführungen erlaubt.

Erfindungsgemäß wird diese Aufgabe von einer Schnellkupplung mit einer Grundplatte und einer Trägerplatte gemäß Anspruch 1 gelöst. Hierzu umfasst die erfindungsgemäße Schnellkupplung einen Zugrahmen, der beweglich an der Grundplatte geführt ist und Mittel zur Verbindung mit der Trägerplatte aufweist.

Durch die Mittel zur Verbindung mit der Trägerplatte können Zugrahmen und Trägerplatte kraftschlüssig miteinander verbunden werden. Der Zugrahmen nimmt dabei die großen Kräfte auf, welche bei der Verbindung von Druckmittelzuführungen entstehen. Zusätzlich kann die Trägerplatte zuerst mit dem Zugrahmen verbunden werden und muss während des Kuppelvorgangs so nicht mehr von Hand gehalten werden.

Die mit dem Zugrahmen verbundene Trägerplatte wird beim Schließen der Kupplung mittels des Zugrahmens gegen die Grundplatte bewegt. Hierdurch werden auch die jeweils auf Grundplatte und Trägerplatte angebrachten Druckmittelzuführungen ineinander geschoben und so druckdicht miteinander verbunden. Der Zugrahmen überträgt dabei die notwendige Kraft auf die Trägerplatte und erlaubt so eine sichere und kompakte Verbindung.

Des weiteren können durch den Einsatz des Zugrahmens beliebig viele und beliebig angeordnete Druckmittelzuführungen gekuppelt werden, da durch die Führung des Zugrahmens an der Grundplatte quer zur Kuppelrichtung entstehende Kräfte vermieden bzw. durch die Führung aufgefangen werden. Die Führung des Zugrahmens an der Grundplatte hält den Zugrahmen also quer zur Kuppelrichtung, während der Zugrahmen in Kuppelrichtung linear gegen die Grundplatte bewegbar ist.

Vorteilhafterweise entsteht dabei die Bewegung zwischen dem Zugrahmen und der Grundplatte aufgrund einer zwischen dem Zugrahmen und der Grundplatte wirkenden Druckkraft. Hierzu ist die Grundplatte vorteilhafterweise zwischen einem vorderen Teil und einem hinteren Teil des Zugrahmens angeordnet. Die Druckkraft wird dann vorteilhafterweise zwischen dem hinteren Teil des Zugrahmens und der Grundplatte erzeugt, so dass die mit dem vorderen Teil des Zugrahmens verbundene Trägerplatte durch den Zugrahmen gegen die Grundplatte gezogen wird. Dies hat den Vorteil, dass lediglich im Zugrahmen, welcher durch seine Konstruktion zur Aufnahme von Zugkräften gut geeignet ist, Zugkräfte auftreten. Alle anderen Teile müssen lediglich Druckkräfte aufnehmen und können so wesentlich kompakter gestaltet werden.

Vorteilhafterweise ist die Zugrahmen durch das Drehen eines Excenters gegen die Grundplatte bewegbar. Ein solcher Excenter ist eine äußerst kompakte und dennoch stabile Möglichkeit, um die hohen Kräfte, welche bei der Verbindung von Druckmittelzuführungen auftreten, aufzunehmen.

Vorteilhafterweise entsteht der Druck zwischen Grundplatte und Zugrahmen, durch welchen die mit dem Zugrahmen verbundene Trägerplatte zum Schließen der Kupplung gegen die Grundplatte gedrückt wird, dabei durch das Drehen des Excenters. Ist die Trägerplatte mit einer Vorderseite des Zugrahmens verbunden, so übt der größere werdende Abstand zwischen der Außenkante des Excenters und seiner Drehachse bei einer Drehung des Excenters einen Druck zwischen einer Hinterseite des Zugrahmens und der Grundplatte aus, so dass die Vorderseite des Zugrahmens, die mit der Trägerplatte verbunden ist, gegen die Grundplatte gezogen wird. So können große Kräfte übertragen und aufgenommen werden, wobei die Konstruktion aus Zugrahmen und Excenter eine geschickte Verteilung dieser Kräfte ermöglicht. Dies erlaubt es, die Konstruktion kompakt und einfach zu halten und einfache und damit billig herzustellende Bauteile zu verwenden.

Vorteilhafterweise ist an dem Excenter dabei ein Hebel angebracht, über welchen der Excenter um seine Drehachse gedreht werden kann. Durch die Hebelwirkung des Hebels lässt sich eine einfache und bequeme Bedienung bei gleichzeitig hoher Kuppelkraft erreichen.

Weiterhin vorteilhafterweise ist der Zugrahmen an der Grundplatte vorgespannt, so dass er sich in eine Richtung automatisch bewegt und nur in die andere Richtung durch Kraftaufwendung bewegt werden muss. Üblicherweise bewegt die Vorspannung dabei die Trägerplatte von der Grundplatte weg, um das Öffnen der Schnellkupplung zu erleichtern.

Weiterhin vorteilhafterweise umfasst der Zugrahmen dabei Zugjoche und Zugstreben. Die Zugstreben wirken dabei als Führung mit der Grundplatte, während die Zugjoche die Zugstreben hinten und vorne verbinden. Dies erlaubt eine günstige Verteilung der auftretenden Kräfte bei gleichzeitig einfachem und kostengünstigem Aufbau. Die Zugstreben laufen dabei vorteilhafterweise in Aussparungen der Grundplatte, so dass der Zugrahmen seitlich von der Grundplatte gehalten wird, entlang der Zugstreben aber beweglich ist. Vorteilhafterweise können dabei die vorderen Zugjoche mit der Trägerplatte verbunden werden, während die hinteren Zugjoche den Druck durch das Drehen des Excenters aufnehmen und an die vorderen Zugjoche weitergeben. So wird durch Drehen des Excenters das hintere Joch von der Grundplatte weg gedrückt und so das vordere Joch mit der Trägerplatte gegen die Grundplatte gezogen.

Weiterhin vorteilhafterweise umfasst der erfindungsgemäße Zugrahmen eine Führung, in welche die Trägerplatte einschiebbar ist. Dies erlaubt eine einfache Verbindung der Trägerplatte mit dem Zugrahmen und so ein bequemes Schließen der Kupplung. Die Trägerplatte wird dabei zuerst in die Führung des Zugrahmens geschoben, woraufhin der Zugrahmen mit der Trägerplatte gegen die Grundplatte bewegt wird und so die Verbindung schließt.

Vorteilhafterweise ist die Führung dabei im wesentlichen senkrecht zur Bewegungsrichtung des Zugrahmens angeordnet. Die Trägerplatte wird damit im wesentlichen von der Seite in den Zugrahmen eingeschoben, wobei die Führung die Trägerplatte in Kupplungsrichtung sicher hält und die beim Kuppeln entstehenden Kräfte über die gesamte Länge der Führung auf die Trägerplatte überträgt. Dies ermöglicht wiederum eine einfache und damit billig herzustellende Konstruktion. Vorteilhafterweise weist die Führung auf einer Seite Stoppelemente auf, welche die Trägerplatte in der richtigen Position gegenüber der Grundplatte in der Führung stoppen, so dass ein einfaches und bequemes Ankuppeln möglich wird.

Vorteilhafterweise ist an der Grundplatte ein Befestigungselement angebracht, mit dem die Schnellkupplung z. B. an einem Baufahrzeug montiert werden kann.

Weiterhin vorteilhafterweise ist der Excenter drehbar an der Grundplatte gelagert. Hierzu können seitlich an der Grundplatte Drehlagerzapfen angeordnet sein, auf denen der Excenter gelagert ist. Vorteilhafterweise sind dabei zwei Excenter vorgesehen, die auf jeweils gegenüberliegenden Seiten auf gleicher Höhe der Grundplatte mit gleicher Achsausrichtung gelagert sind.

Durch die feste Montage der Grundplatte z. B. an einem Baufahrzeug lässt sich der Excenter leicht gegen die Grundplatte drehen, da diese selbst unbeweglich ist und so ein festes Widerlager bildet.

Vorteilhafterweise drückt bei einer solchen drehbaren Lagerung des Excenters an der Grundplatte der Excenter zur Bewegung des Zugrahmens gegen ein hinteres Zugjoch des Zugrahmens, wenn er um seine an der Grundplatte gelagerte Achse gedreht wird. Hierdurch wird der Zugrahmen gegen die Grundplatte nach hinten bewegt und so die mit dem vorderen Zugjoch verbundene Trägerplatte gegen die Grundplatte gedrückt. Dies stellt eine sichere Verbindung der an Grundplatte und Trägerplatte angebrachten Druckmittelzuführungen her.

Diese Anordnung ist deshalb von großem Vorteil, weil der Excenter lediglich Druckkräfte übertragen muss und so kompakt und einfach gestaltet werden kann. Einzig der Zugrahmen überträgt dabei Zugkräfte vom hinteren Zugjoch auf das vordere Zugjoch. Insbesondere wenn der Zugrahmen Zugstreben umfasst, welche die Zugjoche auf beiden Seiten verbinden, können die auftretenden Zugkräfte wirkungsvoll übertragen werden, ohne die Komplexität oder das Gewicht der Konstruktion zu stark zu erhöhen.

Alternativ kann der Excenter jedoch auch am hinteren Zugjoch des Zugrahmens drehbar gelagert sein. Vorteilhafterweise drückt dann der am hinteren Zugjoch gelagerte Excenter gegen die Grundplatte und drückt so die mit dem vorderen Zugjoch verbundene Trägerplatte gegen die Grundplatte. Aus dieser Konstruktion ergeben sich im wesentlichen die gleichen Vorteile wie aus der ebenen beschriebenen Konstruktion mit umgekehrter Anordnung, wobei vorteilhafterweise nun der Zugrahmen am Baufahrzeug befestigt seien sollte und die Grundplatte im Zugrahmen beweglich geführt sein sollte.

Die feste Anordnung der Grundplatte hat gegenüber der festen Anordnung des Zugrahmens jedoch den Vorteil, dass die Druckmittelzuführungen bei unbeweglicher Grundplatte am Baufahrzeug nicht bei jedem Schließen der Schnellkupplung bewegt werden, so dass diese Anordnung den Verschleiß vermindert.

Vorteilhafterweise ist der Excenter so gestaltet, dass er in einer Verschlussposition selbstgehemmt ist. Dies hat den Vorteil, dass sich der Excenter nicht selbsttätig aus der Verschlussposition herausbewegen und so die Schnellkupplung freigeben kann. Vielmehr hemmt sich der Excenter selbst, sobald er in die Verschlussposition gedreht wurde. Zum Öffnen der Schnellkupplung muss nun wieder eine Kraft von außen aufgewendet werden, um den Excenter gegen seine Selbsthemmung aus der Verschlussposition herauszudrehen und so die Schnellkupplung zu öffnen. Dies erhöht die Sicherheit und vermindert den Verschleiß, da ein eventuell zusätzlich angeordnetes Verriegelungselement durch die Selbsthemmung des Excenters keine Kraft aufnehmen muss, sondern den Excenter lediglich gegen ungewolltes Verdrehen schützen muss.

Hierzu weist der Excenter vorteilhafterweise mindestens auf einer Seite eine im wesentlichen plane Außenkante auf. In der Verriegelungsposition kommt diese plane Außenkante mit dem Gegenelement des Excenters, bei Lagerung des Excenters an der Grundplatte also mit dem hinteren Zugjoch, in Verbindung. Hierdurch ist der Excenter in dieser Position selbstgehemmt, da die im wesentlichen plane Außenkante, welche gegen das Gegenelement gedrückt wird, sich einer Verdrehung aus dieser Position widersetzt. Durch eine solche Konstruktion wird auch der Verschleiß minimiert, da durch die Flächenberührung zwischen der planen Außenkante und dem Gegenelement lediglich eine minimale Flächenpressung entsteht, wodurch die auftretenden Kräfte optimal auf die beteiligten Elemente verteilt werden.

Weiterhin vorteilhafterweise weist der Excenter auf zwei Seiten im wesentlichen plane Kanten auf, welche einen unterschiedlichen Abstand zur Drehachse aufweisen. Mit der einen planen Kante mit dem größeren Abstand zur Drehachse berührt der Excenter das Gegenelement dabei in einer Verschlussposition, während er bei geöffneter Kupplung mit der im wesentlichen planen Kante mit dem geringeren Abstand zur Drehachse das Gegenelement berührt. In der geöffneten Position der Schnellkupplung ist der Abstand zwischen der Grundplatte und dem hinteren Zugjoch damit gering, wird der Excenter jedoch gedreht, so dass er mit der planen Kante mit dem größeren Abstand zur Drehachse gegen das Gegenelement drückt, wird der Abstand zwischen dem hinteren Zugjoch und der Grundplatte vergrößert, so dass das vordere Zugjoch mit der Trägerplatte gegen die Grundplatte drückt. Diese Konstruktion erlaubt ein besonders bequemes an- und abkuppeln, da der Excenter sowohl in der Verschlussposition als auch bei geöffneter Schnellkupplung jeweils selbst gehemmt ist.

Weiterhin vorteilhafterweise findet sich zwischen den im wesentlichen planen Au-βenkanten ein gekrümmter Bereich, so dass der Excenter stetig und ohne das Auftreten von Kraftspitzen von einer offenen Position in die Verschlussposition und wieder zurück bewegt werden kann.

Weiterhin vorteilhafterweise weist die Grundplatte mindestens einen Führungsstift auf, der bei der Bewegung der Trägerplatte gegen die Grundplatte in eine Aussparung der Trägerplatte eingreift. Dieser Führungsstift sorgt dafür, dass die Trägerplatte relativ zur Grundplatte in die richtige Position gebracht wird und führt die Trägerplatte beim Kuppelvorgang zusätzlich. Die Spitze des Führungsstifts ist dabei vorteilhafterweise abgeschrägt, so dass sich zusätzlich eine Zentrierfunktion ergibt.

Weiterhin vorteilhafterweise weist die Schnellkupplung der vorliegenden Erfindung ein Verriegelungselement auf. Mit diesem kann die Schnellkupplung in einer Verschlussposition verriegelt werden, so dass sich ein zusätzlicher Schutz gegen ungewolltes Öffnen ergibt. Vorteilhafterweise verriegelt das Verriegelungselement dabei den Excenter in seiner Verschlussposition. Wird der Excenter über einen Hebel bewegt, kann das Verriegelungselement auch so angeordnet sein, dass es die Bewegung des Hebels aus der Verschlussposition heraus verhindert.

Insgesamt ergibt sich durch den Aufbau der Schnellkupplung mit dem Zugrahmen die Möglichkeit, beliebig viele und beliebig große Druckmittelzuführungen zu kuppeln, da durch die Anpassung des Zugrahmens, der Grundplatte und der Trägerplatte die größeren Kräfte ertragbar sind, ohne dass die Konstruktion ihre kompakte Bauweise verliert. Insbesondere die Verwendung des Excenters zur Erzeugung eines Drucks zwischen Grundplatte und einem hinteren Zugjoch erlaubt es, dass der Excenter lediglich Druckkräfte aufnehmen muss und so kompakt gestaltet sein kann.

Ein Ausführungsbeispiel der vorliegenden Erfindung wird nun anhand von Zeichnungen näher beschrieben. Dabei zeigen:
- Figur 1:: eine Seitenansicht einer Schnellkupplung nach dem Stand der Technik,
- Figur 2:: eine perspektivische Ansicht eines Ausführungsbeispiels der vorliegenden Erfindung,
- Figur 3a:: eine perspektivische Ansicht des Ausführungsbeispiels der vorliegenden Erfindung in geöffneter Stellung ohne Trägerplatte,
- Figur 3b:: eine perspektivische Ansicht des Ausführungsbeispiels der vorliegenden Erfindung in geöffneter Stellung mit Trägerplatte,
- Figur 4a:: eine perspektivische Ansicht des Ausführungsbeispiels der vorliegenden Erfindung in einer geschlossenen Stellung ohne Trägerplatte,
- Figur 4b:: eine perspektivische Ansicht des Ausführungsbeispiels der vorliegenden Erfindung in einer geschlossenen Stellung mit Trägerplatte,
- Figur 5:: eine Seiten- und eine Schnittansicht des Ausführungsbeispiels der vorliegenden Erfindung in einer geöffneten Stellung,
- Figur 6:: eine Seiten- und eine Schnittansicht des Ausführungsbeispiels der vorliegenden Erfindung in einer geschlossenen Stellung,
- Figur 7:: eine perspektivische Ansicht des Ausführungsbeispiels der vorliegenden Erfindung in geöffneter Stellung,
- Figur 8:: eine perspektivische Ansicht des Ausführungsbeispiels der vorliegenden Erfindung in einer geöffneten Stellung, wobei die Trägerplatte weiter eingeschoben ist,
- Figur 9:: eine perspektivische Ansicht des Ausführungsbeispiels der vorliegenden Erfindung in einer geöffneten Stellung, wobei die Trägerplatte komplett eingeschoben ist,
- Figur 10:: eine perspektivische Ansicht eines Ausführungsbeispiels der vorliegenden Erfindung in einer teilweise geschlossenen Stellung,
- Figur 11:: eine perspektivische Ansicht eines Ausführungsbeispiels der vorliegenden Erfindung in einer teilweise geschlossenen Stellung und
- Figur 12:: eine perspektivische Ansicht des Ausführungsbeispiels der vorliegenden Erfindung in einer komplett geschlossenen Stellung.

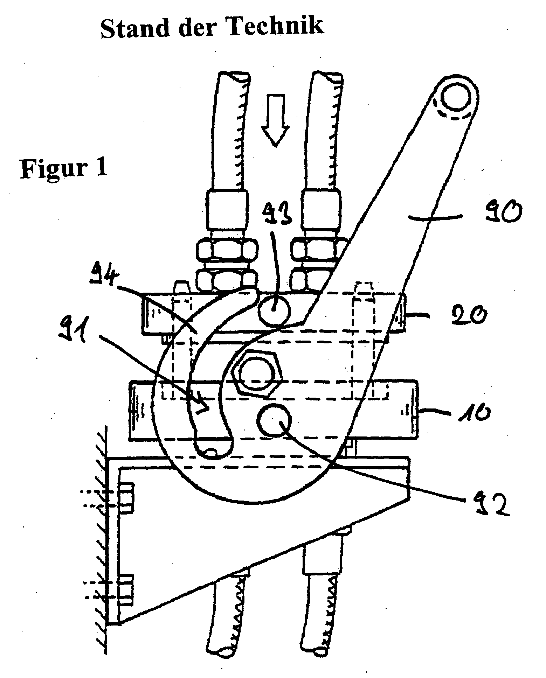

Figur 1 zeigt eine Schnellkupplung nach dem Stand der Technik. Auch diese weist eine Grundplatte 10 und eine Trägerplatte 20 auf, an welchen die zu verbindenden Druckmittelzuführungen angebracht sind. Auf beiden Seiten sind an der Grundplatte 10 Spannzangen 90 an koaxialen Drehlagerzapfen 92 drehbar gelagert. Die Spannzangen 90 weisen kurvenförmige Eingriffsschlitze 91 auf, mit denen sie von den Rändern der Trägerplatte 20 koaxial zueinander und parallel zu den Drehlagerzapfen 92 hervorstehende Spannzapfen 93 übergreifen. Der Nachteil bei dieser Konstruktion besteht darin, dass die kurvenförmigen Eingriffsschlitze 91 beim Kuppelvorgang eine Kraftkomponente quer zur Kuppelrichtung erzeugen und zusätzlich seitliche Kräfte dadurch entstehen können, dass die Kupplungen nicht paarweise beiderseits der Schwenkachse der Spannzangen 90 angeordnet sind. Des weiteren muss beim Kuppeln die bei großen Nennweiten sehr schwere Trägerplatte 20 mit der einen Hand gehalten werden, während mit der zweiten Hand die Spannzange 90 betätigt wird. Ein weiterer Nachteil der bisherigen Konstruktion besteht darin, dass bei großen Nennweiten die sehr großen Kräfte über die Spannzapfen 93 übertragen werden müssen, und diese aus diesem Grund relativ groß dimensioniert werden müssen. Dies erfordert sehr breite Eingriffsschlitze 91 und ein ebenfalls sehr groß dimensioniertes kurvenförmiges Spannelement 94, was insgesamt Gewicht und Größe der Spannzangen 90 enorm erhöht.

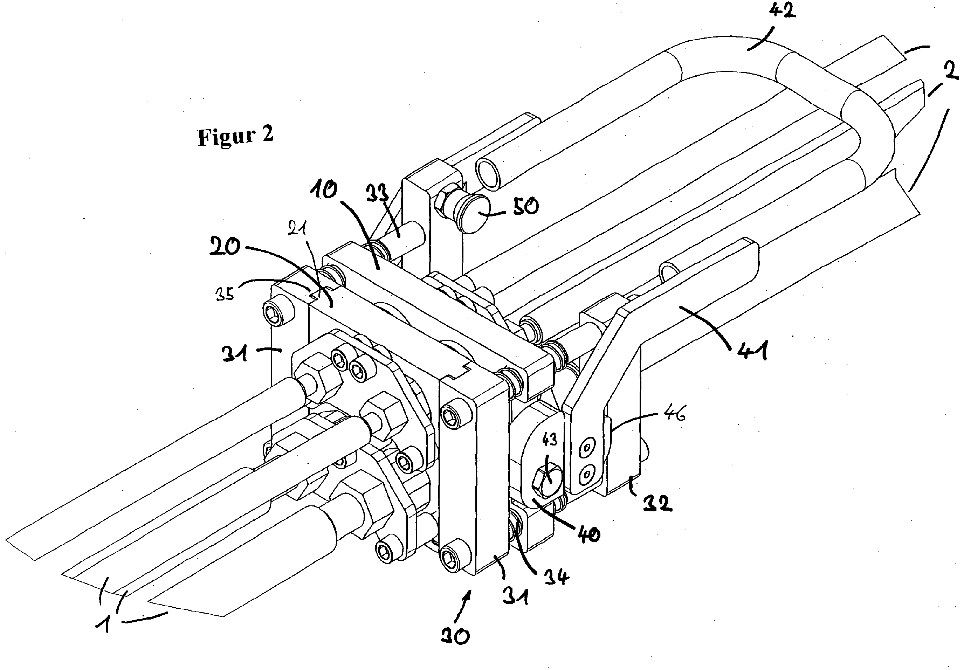

Figur 2 zeigt nun ein Ausführungsbeispiel der vorliegenden Erfindung. Der Zugrahmen 30 aus Zugjochen 31 und 32 und Zugstreben 33 ist dabei beweglich an der Grundplatte 10, an der die Druckmittelzuführungen der Druckleitungen 2 angeordnet sind, geführt. Hierzu laufen die Zugstreben 33 des Zugrahmens 30 in entsprechenden Aussparungen der Grundplatte 10, in diesem Fall in Bohrungen in den Ecken der Grundplatte. Die Trägerplatte 20, auf welcher die Druckmittelzuführungen für die Druckleitungen 1 angeordnet sind, lässt sich über eine Führung aus Federn 21 seitlich an der Trägerplatte 20 und Nuten 35 in den vorderen Zugjochen 31 mit dem Zugrahmen 30 verbinden, so dass die Kupplung dadurch geschlossen werden kann, dass der Zugrahmen 30 gegen die Grundplatte 10 nach hinten bewegt wird und so die mit den vorderen Zugjochen 31 verbundene Trägerplatte 20 gegen die Grundplatte 10 gezogen wird.

Hierbei sind Federn 34 vorgesehen, welche zwischen den vorderen Zugjochen 31 und der Grundplatte 10 rund um die Zugstreben 33 angeordnet sind und so den Zugrahmen 30 gegen die Grundplatte nach vorne hin vorspannen. Die Federn 34 erleichtern so das Öffnen der Kupplung, da sie die Trägerplatte 20 beim Öffnen von der Grundplatte 10 wegdrücken.

Zum Schließen der Kupplung sind Excenter 40 vorgesehen, welche über Drehlagerzapfen 43 auf zwei gegenüberliegenden Seiten der Grundplatte 10 drehbar angebracht sind. An den Excentern 40 ist ein aus Winkelelementen 41 und einem Griff 42 bestehender Hebel angebracht, über welchen die Excenter 40 um die Drehlagerzapfen 43 gedreht werden können.

Die Schnellkupplung ist hier in einer geschlossenen Kuppelposition gezeigt. Hierzu sind die Excenter 40 so gedreht, dass sie mit einer Seite 46, welche einen großen Abstand von der Drehachse aufweist, gegen die Innenseiten der hinteren Zugjoche 32 drücken. Hierdurch weisen die hinteren Zugjoche 32 einen maximalen Abstand von der Grundplatte 10 auf, so dass die mit den vorderen Zugjochen 31 verbundene Trägerplatte 20 mit der Grundplatte 10 einen minimalen Anstand aufweist. So ist die Verbindung zwischen den Druckmittelzuführungen an Trägerplatte 20 und Grundplatte 10 hergestellt.

Diese Verbindung kann sich insbesondere dadurch nicht lösen, dass die Seite 46 des Excenters 40 eine im wesentlichen plane Außenkante aufweist, mit welcher der Excenter 40 mit dem hinteren Zugjoch 32 in Kontakt ist. Hierdurch tritt eine Selbsthemmung auf, da die Kraft, welche das hintere Zugjoch 32 von der Grundplatte 10 wegdrückt, über die Drehlagerzapfen 43 und die Excenter 40 in gerader Linie und senkrecht zur planen Außenkante der Seite 46 auf die hinteren Zugjoche 32 des Zugrahmens 30 übertragen wird. Als zusätzliche Sicherung ist zudem ein Verriegelungselement 50 vorgesehen, welches verhindert, dass der an den Excentern 40 angebrachte Hebel versehentlich aus der Verschlussposition bewegt wird.

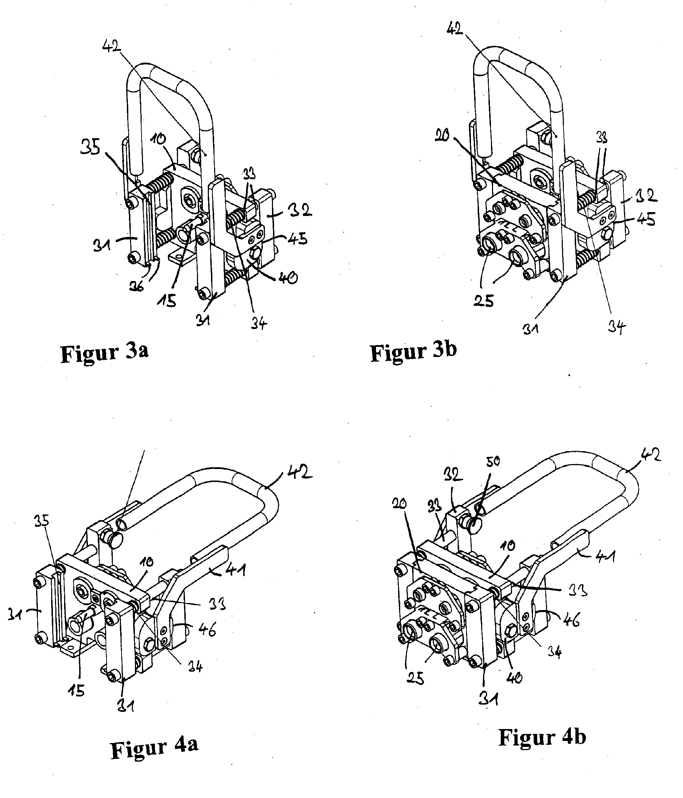

Figur 3a und Figur 3b zeigen das Ausführungsbeispiel der erfindungsgemäßen Schnellkupplung in einer geöffneten Position, wobei Figur 3a die Schnellkupplung ohne Trägerplatte 20, Figur 3b die Schnellkupplung mit Trägerplatte 20 zeigt.

In Figur 3a ist die Nut 35 an den vorderen Zugjochen 31 zu sehen, welche sich entlang der Innenseiten der Zugjoche 31 über deren gesamte Länge erstreckt. Zusätzlich sind an der Innenseite der vorderen Zugjoche 31 in der Nähe des unteren Randes Stoppelemente 36 vorgesehen, welche bei einem Einschieben der Trägerplatte 20 in die Nut 35 die Trägerplatte in der richtigen Position fixieren. Hierdurch muss die Trägerplatte beim eigentlichen Kuppelvorgang nicht mehr von Hand gehalten werden, was das Kuppeln erheblich erleichtert.

Um bei einer Bewegung der Trägerplatte 20 auf die Grundplatte 10 hin die jeweiligen Druckmittelzuführungen exakt miteinander in Deckung zu bringen, ist auf der Grundplatte 10 ein Führungsstift 15 vorgesehen, welcher eine abgeschrägte Spitze aufweist und in der Mitte der Grundplatte 10 zwischen den Druckmittelzuführungen angeordnet ist. Der Führungsstift 15 ist dabei parallel zu den Zugstreben 33 des Zugrahmens 30 angeordnet und zeigt nach vorne in Richtung Trägerplatte. Bei einer Bewegung der Trägerplatte 20 in Richtung Grundplatte 10 greift dieser Führungsstift 15 in eine Aussparung in der Trägerplatte 20 und führt so Trägerplatte und Grundplatte exakt aufeinander.

Diese Trägerplatte 20 ist in Figur 3b mit Hilfe von seitlich an der Trägerplatte 20 angeordneten Federn in die Nuten 35 der vorderen Zugjoche 31 seitlich eingeschoben. Durch die Stoppelemente 36 wird die Trägerplatte 20 dabei in einer Position genau gegenüber der Grundplatte 10 gehalten. An der Trägerplatte 20 sind Druckmittelzuführungen 25 angeordnet, welche so den entsprechenden Druckmittelzuführungen auf der Grundplatte 10 gegenüber angeordnet sind.

Der an den Excentern angebrachte Hebel aus Griff 42 und Winkelelementen 41 steht dabei in einer solchen Position zum Zugrahmen, dass der Griff 42 im wesentlichen in einer Ebene mit den vorderen Zugjochen 31 und der Trägerplatte 20 verläuft. Hierdurch sind die Excenter 40 in Figur 3a und Figur 3b in eine solche Position gedreht, dass die Innenseiten der hinteren Zugjoche 32 von den Federn 34 gegen eine Seite 45 der Excenter, welche einen geringen Abstand zur Drehachse aufweist, gedrückt werden. Die vorderen Zugjochen 31 und damit die Trägerplatte 20 haben also einen maximalen Abstand zur Grundplatte 10, die jeweiligen Druckmittelzuführungen stehen nicht in Kontakt.

In Figur 4a und Figur 4b ist nun das Ausführungsbeispiel der Schnellkupplung in einer Verschlussposition zu sehen. Hierzu wurde der Hebel 42 in eine Ebene im wesentlichen senkrecht zur Ebene der Zugjoche sowie der Grund- und der Trägerplatte gebracht, wodurch über die Winkelelemente 41 die Excenter 40 um ihre Drehachse in eine Verschlussposition gedreht wurden, in welcher sie mit einer Seite 46 auf den Innenseiten der hinteren Zugjoche 32 aufliegen. Da die Excenter 40 drehbar an der Grundplatte 10 angeordnet sind und nun über ihre Seiten 46 die hinteren Zugjoche 32 wegdrücken, werden hierdurch die vorderen Zugjoche 31 durch den Zugrahmen 30 gegen die Grundplatte 10 gezogen.

In Figur 4a ist wiederum der Führungsstift 15 in der Mitte der Grundplatte 10 zu sehen, welcher in Figur 4b in eine entsprechende Öffnung in der Trägerplatte 20 eingeschoben ist und so die Trägerplatte 20 gegen die Grundplatte 10 zentriert. Hierdurch sorgt der Führungsstift 15 beim Schließen der Schnellkupplung dafür, dass die Druckmittelzuführungen 25 auf der Trägerplatte 20 mit denen auf der Grundplatte 10 zur Deckung kommen.

Weiterhin ist ein Verriegelungselement 50 vorgesehen, welches im wesentlichen aus einem Stift besteht, der auf einer Oberseite eines hinteren Zugjochs 32 von innen nach außen durch das Zugjoch hindurchgreift und nach außen hin vorgespannt ist. Ragt das Verriegelungselement 50 also auf der Außenseite des hinteren Zugjochs 32 heraus, können die Winkelelemente 41 nicht aus Versehen nach oben aus der Verschlussposition heraus bewegt werden.

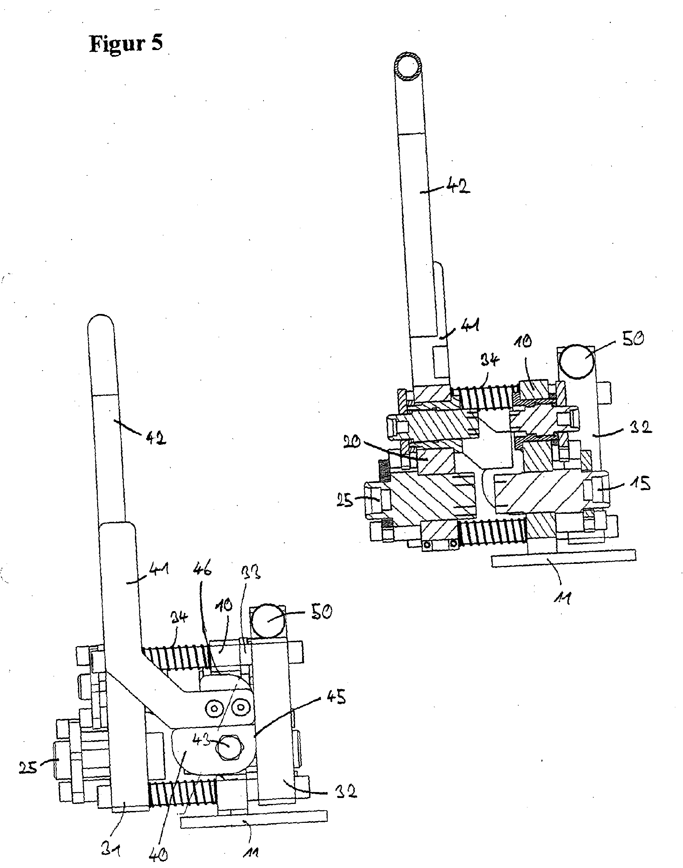

Figur 5 zeigt eine Seiten- sowie eine Schnittansicht des Ausführungsbeispiels der erfindungsgemäßen Schnellkupplung in einer geöffneten Position. Hebel 42 liegt dabei in einer Ebene mit den vorderen Zugjochen 31 und der Trägerplatte 20. Über die Winkelelemente 41 ist damit der Excenter 40 so gedreht, dass er mit seiner Seite 45 auf einer Innenseite des hinteren Zugjoches 32 aufliegt. Diese Seite 45 des Excenters 40 weist eine im wesentlichen plane Außenkante auf, so dass die gesamte Außenkante mit dem Zugjoch 32 in Kontakt steht. Weiterhin ist gut zu sehen, dass die Seite 45 des Excenters 40 einen wesentlich geringeren Abstand zum Drehlagerzapfen 43 und damit zur Drehachse des Excenters 40 aufweist als die Seite 46, welche ebenfalls eine im wesentlichen plane Außenkante besitzt. Durch den geringen Abstand zwischen der Seite 45 und der Drehachse des Excenters 40 wird in dieser geöffneten Position der Zugrahmen von den Federn 34 nach vorne geschoben.

Die Grundplatte 10 weist dabei Bohrungen auf, durch welche die Zugstreben 33 greifen und mit denen der Zugrahmen an der Grundplatte 10 geführt wird. Weiterhin ist an der Grundplatte 10 ein Befestigungselement 11 vorgesehen, welches sich außerhalb des Zugrahmens befindet und mit welchem die Schnellkupplung z. B. an einem Baufahrzeug befestigt werden kann.

In der Schnittansicht rechts in Figur 5 ist insbesondere gut zu sehen, wie die Druckmittelzuführung 25 auf der Trägerplatte 20 und die Druckmittelzuführung 15 auf der Grundplatte 10 einander gegenüberliegen. Da sich die Schnellkupplung in einer geöffneten Position befindet, greifen die Druckmittelzuführungen 25 und 15 nicht ineinander ein, so dass die Trägerplatte 20 entlang ihrer Führung in den vorderen Zugjochen 31 verschoben werden kann.

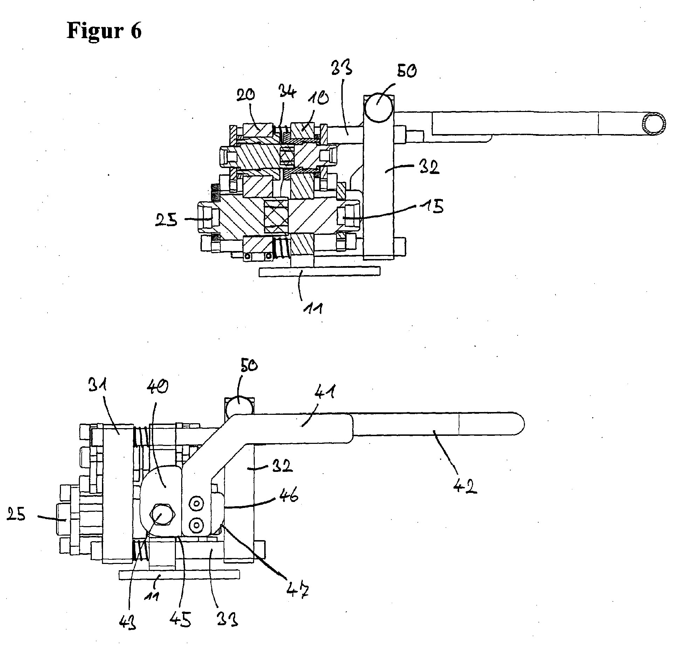

Figur 6 zeigt nun eine Schnittansicht und eine Seitenansicht des Ausführungsbeispiels der erfindungsgemäßen Schnellkupplung in einer Verschlussposition. Hierzu wurde der Griff 42 in eine Ebene gedreht, welche im wesentlichen senkrecht auf der Ebene der Grund- und Trägerplatten steht. Hierdurch wurden die Excenter 40 um ihre Drehlagerzapfen 43, mit welchen sie an der Grundplatte 10 angebracht sind, gedreht. Hierdurch sind sie nicht mehr mit ihrer Seite 45, sondern mit ihrer Seite 46 mit der Innenseite der hinteren Zugjoche 32 in Kontakt. Auch die Seite 46 der Excenter 40 weist eine im wesentlichen plane Außenkante auf und liegt damit flächig auf der Innenseite des Zugrahmens auf. Durch den größeren Abstand der Seite 46 von der Drehachse des Excenters 40 ist nun der Abstand zwischen der Grundplatte 10 und dem hinteren Zugjoch 32 des Zugrahmens größer, so dass das Zugjoch 31 und die damit verbundene Trägerplatte 20 mittels des Zugrahmens gegen die Grundplatte 10 gezogen wird.

Um die Bewegung von einer offenen Position in diese geschlossene Position zu erleichtern, weist der Excenter 40 zwischen den Seiten 45 und 46 mit im wesentlichen planen Außenkanten einen gekrümmten Bereich 47 auf, so dass der Excenter 40 in stetiger Bewegung von der einen Position in die anderen gedreht werden kann.

Eine gedachte Verbindungslinie zwischen der Drehachse des Excenters 40 und der Mitte der im wesentlichen planen Außenkante der Seite 46 steht dabei senkrecht auf dieser planen Außenkante, so dass Kuppelkräfte, welche die Grundplatte 10 nach hinten von der Trägerplatte wegdrücken, senkrecht auf der Verbindungsfläche zwischen Excenter und hinterem Zugjoch 32 stehen. Dies ermöglicht es einerseits, dass die erfindungsgemäße Schnellkupplung in der Verschlussposition selbstgehemmt ist und sich ohne Krafteinwirkung von außen auf den Hebel nicht aus dieser löst. Außerdem hat die plane Außenkante der Seite 46 den Vorteil, dass durch die flächige Berührung dieser planen Außenkante mit dem hinteren Zugjoch 32 die auftretenden Kräfte auf eine große Fläche verteilt werden, was den Verschleiß vermindert und eine relativ kompakte Konstruktion erlaubt.

Insbesondere in der Schnittansicht oben in Figur 6 ist nun gut zu sehen, wie die Druckmittelzuführungen 25 der Trägerplatte 20 und die Druckmittelzuführungen 15 der Grundplatte 10 ineinandergreifen und in dieser Verschlussposition der erfindungsgemäßen Schnellkupplung druckdicht miteinander verbunden sind.

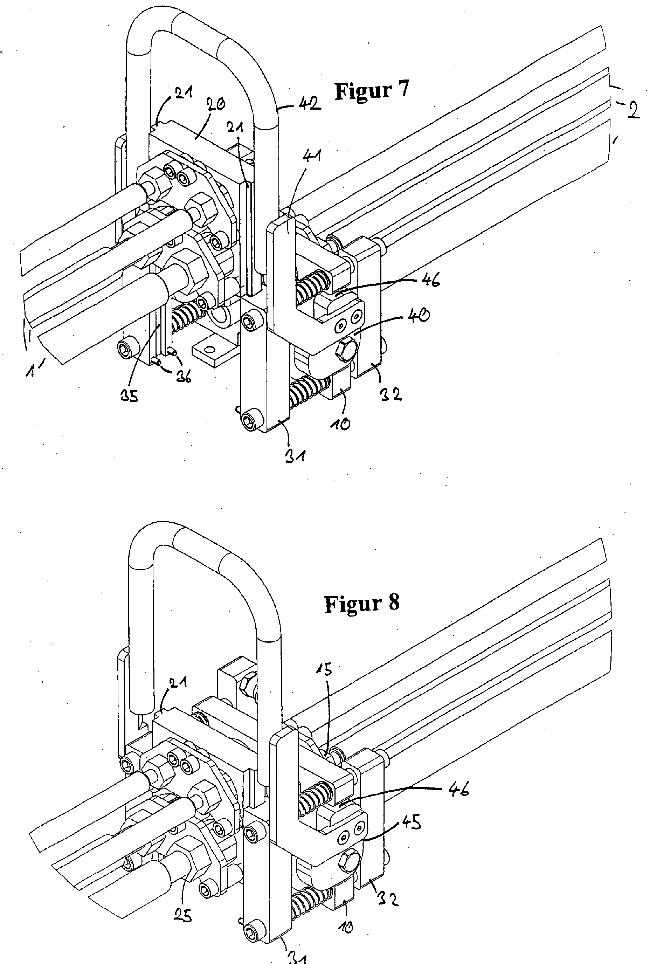

In Figur 7 bis Figur 12 wird nun der Kuppelvorgang schrittweise erläutert.

Figur 7 zeigt das Ausführungsbeispiel der erfindungsgemäßen Schnellkupplung in einer geöffneten Position, wobei die Trägerplatte 20 noch nicht mit dem Zugrahmen 30 verbunden ist. Die Trägerplatte 20 ist aber bereits oberhalb der vorderen Zugjoche 31 parallel zu diesen angeordnet. Die Federn 21 auf gegenüberliegenden Seiten der Trägerplatte 20 werden dabei in Deckung mit den Nuten 35 auf den Innenseiten der vorderen Zugjoche 31 gebracht.

Wie in Figur 8 zu sehen, wird die Trägerplatte 20 daraufhin seitlich in den Zugrahmen eingeschoben, indem die Federn 21 in die von den Nuten 35 gebildete Führung eingeschoben werden.

Der Excenter 40 befindet sich dabei sowohl in Figur 8 als auch in Figur 7 in der geöffneten Position, in welcher er mit seiner Seite 45 mit den hinteren Zugjochen 32 in Kontakt ist, so dass die vorderen Zugjoche 31 von den Federn 34 von der Grundplatte 10 weg nach vorne gedrückt werden. Hierdurch ist der Abstand zwischen den vorderen Zugjochen 31 mit der Trägerplatte 20 und der Grundplatte 10 maximal, so dass die Druckmittelzuführungen 25 auf der Trägerplatte 20 und die diesen entsprechenden Druckmittelzuführungen 15 auf der Grundplatte 10 nicht miteinander in Kontakt stehen und die Trägerplatte 20 ungehindert in den Zugrahmen eingeschoben werden kann.

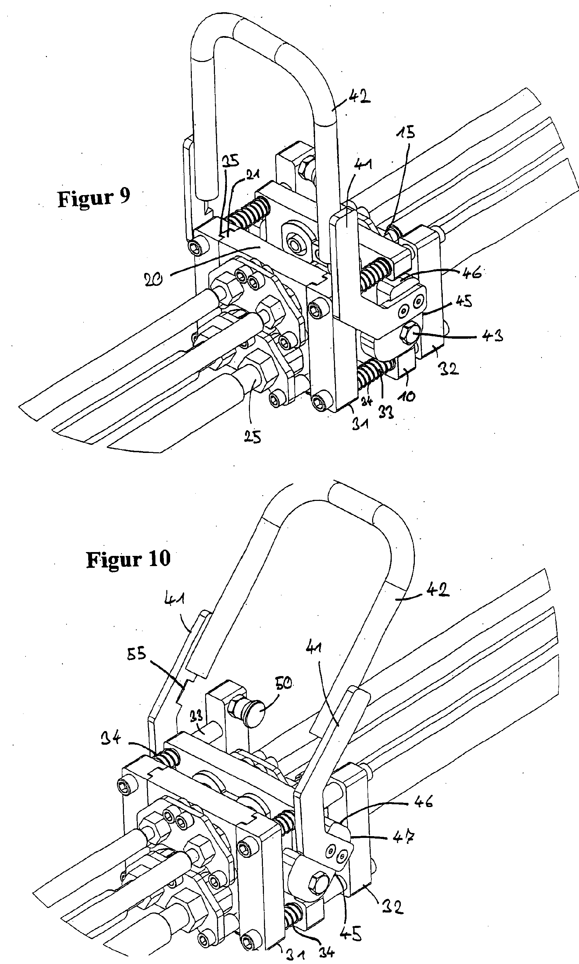

Figur 9 zeigt weiterhin das Ausführungsbeispiel der erfindungsgemäßen Schnellkupplung in geöffneter Position, wobei die Trägerplatte 20 nun komplett in den Zugrahmen 30 eingeschoben ist. Sie wird nun in einer Richtung senkrecht zu den Zugjochen 31 durch die Führung aus Nuten 35 und Federn 21 kraftschlüssig im Zugrahmen gehalten. In dieser komplett eingeschobenen Position liegen die Druckmittelzuführungen 25 den entsprechenden Druckmittelzuführungen 15 auf der Grundplatte 10 direkt gegenüber.

Die Zugstreben 33, welche in Bohrungen oben und unten in den Zugjochen 31 und 32 verschraubt sind, bilden so zusammen mit den Zugjochen einen rechteckigen Zugrahmen. Mit diesen Zugstreben 33 läuft nun der Zugrahmen an der Grundplatte 10 beim Öffnen bzw. Schließen der Schnellkupplung nach hinten oder nach vorne in einer Richtung senkrecht zur Grundplatte 10. Der Zugrahmen wird dabei von den Zugstreben 33, welche durch Bohrungen in den Ecken der Grundplatte 10 greifen, geführt und von Federn 34 nach vorne geschoben.

Figur 10 zeigt das Ausführungsbeispiel der vorliegenden Schnellkupplung in einem nur teilweise gekuppelten Zustand. Hierzu wurde der Hebel 42 nach hinten bewegt, so dass er die Excenter 40 über die Winkelelemente 41 aus der komplett geöffneten Position verdreht hat. Die Excenter 40 sind nun nicht mehr mit der Seite 45, welche einen geringen Abstand zur Drehachse aufweist, mit den hinteren Zugjochen 32 in Kontakt, sondern berühren die Innenseiten der hinteren Zugjoche 32 mit dem gekrümmten Bereich 47. Durch die Krümmung dieses Bereichs 47 treten bei einer Drehung der Excenter keine Kraftspitzen auf, da der Druckverlauf zwischen Excenter und Zugjochen 32 stetig verläuft. Durch die Drehung des Excenters werden nun die vorderen Zugjoche 31 mit der Trägerplatte 20 durch den Zugrahmen 30 mit den Zugstreben 33 gegen die Grundplatte 10 gedrückt. Dies geschieht gegen die Vorspannung durch die Federn 34, welche durch diese Bewegung des Zugrahmens 30 zusammengedrückt werden.

An dem Winkelelement 41 ist auf Höhe des Verriegelungselements 50 eine Abschrägung 55 vorgesehen. Diese Abschrägung 55 befindet sich auf der Innenseite des Winkelelements 41 und drückt damit das Verriegelungselement, wenn das Winkelelement 41 über den Griff 42 gegen den Zugrahmen verdreht wird, nach innen und lässt in diese Richtung das Winkelelement 41 am Verriegelungselement 50 passieren. Die Abschrägung 55 ist hierzu lediglich an einer Hinterseite des Winkelelements 41 vorgesehen, während an der Vorderseite keine Abschrägung vorhanden ist.

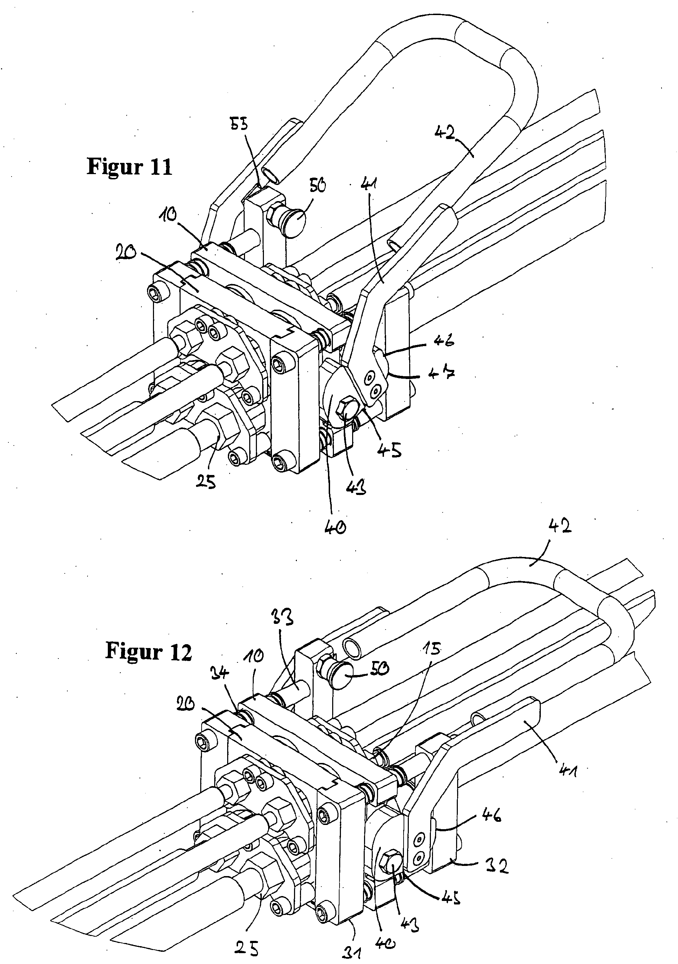

In Figur 11 ist die erfindungsgemäße Schnellkupplung in einer noch weiter geschlossenen Position gezeigt. Das Winkelelement 41 hat schon beinahe das Verriegelungselement 50 passiert und damit den Excenter 40 entlang der gekrümmten Außenkante 47 weiter gedreht. Der Abstand zwischen der Grundplatte 10 und den hinteren Zugjochen 32 ist hierdurch weiter gewachsen, so dass die Trägerplatte 20 mittels des Zugrahmens noch weiter gegen die Grundplatte 10 gezogen ist.

Figur 12 zeigt nun das Ausführungsbeispiel der erfindungsgemäßen Schnellkupplung in seiner Verschlussposition. Die Winkelelemente 41 wurden nun am Verriegelungselement 50 vorbei gedreht, wobei die Abschrägung 55 das Verriegelungselement 50 gegen dessen Vorspannung nach innen gedrückt hatte. Die Winkelemente 41 haben das Verriegelungselement 50 nun aber komplett passiert, so dass es von seiner Vorspannung wieder nach außen gedrückt wird und die Winkelelemente 41 ohne eine manuelle Betätigung des Verriegelungselements 50 nun nicht mehr aus ihrer geschlossenen Position bewegt werden können.

In dieser Position berührt der Excenter 40 die Innenseiten des hinteren Zugjochs 32 mit seiner Seite 46, welche eine im wesentlichen plane Außenkante aufweist und einen großen Abstand zur Drehachse mit dem Drehlagerzapfen 43 besitzt. Hierdurch sind die Druckmittelzuführungen 25, welche an der Trägerplatte 20 angeordnet sind, mit den Druckmittelzuführungen 15 auf der Grundplatte 10 druckfest verkuppelt. Die auftretenden Kräfte werden dabei über den Zugrahmen aus Zugjochen 31 und 32 und Zugstreben 33 und über den Excenter 40, welcher drehbar an der Grundplatte 10 mittels eines Drehlagerzapfens 43 angebracht ist, von der Grundplatte 10 auf die Trägerplatte 20 übertragen.

Diese Konstruktion hat insbesondere den Vorteil, dass Zugkräfte nur in dem Zugrahmen auftreten, welcher diese aufgrund seiner Konstruktion aus Zugjochen 31 und 32 und senkrecht dazu stehenden Zugstreben 33 besonders gut aufnehmen kann. Auf den Excenter 40 wirken dagegen nur Druckkräfte, so dass dieser kompakt und damit relativ leicht gestaltet werden kann.

Insbesondere hat diese Konstruktion den Vorteil, dass beliebig viele und beliebig große Druckmittelzuführungen gekuppelt werden können, da die Konstruktion aus Zugrahmen und Excenter leicht an die größeren Kräfte angepasst werden kann. Auch benötigt diese Konstruktion lediglich einfache und damit preiswert herzustellende Bauteile, welche zumeist nur grob bearbeitet und mit Bohrungen versehen werden müssen.

## Patentansprüche

1. Schnellkupplung mit einer Grundplatte und einer Trägerplatte,
**dadurch gekennzeichnet,**
**dass** der Zugrahmen beweglich an der Grundplatte geführt ist,
der Zugrahmen Mittel zur Verbindung mit der Trägerplatte aufweist und
die Trägerplatte zum Schließen der Kupplung mittels des Zugrahmens gegen die Grundplatte bewegt wird.

2. Schnellkupplung nach Anspruch 1, wobei die Bewegung des Zugrahmens gegen die Grundplatte augrund einer Druckkraft zwischen dem Zugrahmen und der Grundplatte entsteht.

3. Schnellkupplung nach Anspruch 1, wobei der Zugrahmen durch das Drehen eines Excenters gegen die Grundplatte bewegbar ist.

4. Schnellkupplung nach Anspruch 2, wobei der Druck zwischen Grundplatte und Zugrahmen durch Drehen eines Excenters entsteht.

5. Schnellkupplung nach Anspruch 1, wobei der Zugrahmen an der Grundplatte vorgespannt ist.

6. Schnellkupplung nach Anspruch 1, wobei der Zugrahmen Zugjoche und Zugstreben umfasst.

7. Schnellkupplung nach Anspruch 1, wobei der Zugrahmen eine Führung umfasst, in welche die Trägerplatte einschiebbar ist.

8. Schnellkupplung nach Anspruch 7, wobei die Führung im wesentlichen senkrecht zur Bewegungsrichtung der Grundplatte angeordnet ist.

9. Schnellkupplung nach Anspruch 3, wobei am Excenter ein Hebel angebracht ist.

10. Schnellkupplung nach Anspruch 3, wobei der Excenter drehbar an der Grundplatte gelagert ist.

11. Schnellkupplung nach Anspruch 10, wobei der Excenter zur Bewegung des Zugrahmens gegen ein hinteres Zugjoch des Zugrahmens drückt.

12. Schnellkupplung nach Anspruch 3, wobei der Excenter drehbar an einem hinteren Zugjoch des Zugrahmens gelagert ist.

13. Schnellkupplung nach Anspruch 12, wobei der Excenter gegen die Grundplatte drückt.

14. Schnellkupplung nach Anspruch 3, wobei der Excenter in einer Verschlussposition selbstgehemmt ist.

15. Schnellkupplung nach Anspruch 3, wobei der Excenter mindestens auf einer Seite eine im wesentlichen plane Außenkante aufweist.

16. Schnellkupplung nach Anspruch 15, wobei der Excenter auf zwei Seiten im wesentlichen plane Kanten aufweist, welche einen unterschiedlichen Abstand zur Drehachse aufweisen.

17. Schnellkupplung nach Anspruch 16, wobei sich zwischen den im wesentlichen planen Außenkanten ein gekrümmter Bereich befindet.

18. Schnellkupplung nach Anspruch 1, wobei die Grundplatte einen Führungsstift aufweist, der in eine Aussparung der Trägerplatte eingreift.

19. Schnellkupplung nach Anspruch 1 mit einem Verriegelungselement.

20. Schnellkupplung nach Anspruch 1, wobei an der Grundplatte und der Trägerplatte jeweils eine oder mehrere Druckmittelzuführungen angeordnet sind.
